# EUROPEAN PATENT APPLICATION

(11) **EP 4 477 059 A1**
(43) Date of publication of application: **18.12.2024**
(21) Application number: 24179325.6
(22) Date of filing: 31.05.2024
(51) Int. Cl.: A01G 3/06, A01G 3/08, A01G 20/47, A01G 3/053, B27B 17/00

(54) **DEVICE FOR MAINTENANCE OF A LAND OR GARDEN**

(30) Priority: 15.06.2023 IT 202300012375
(71) Applicant: Stiga S.p.A., 31033 Castelfranco Veneto (TV) (IT)
(72) Inventor: RIGONI, Mattia, 31015 Conegliano (TV) (IT); CAMERON, James, 31030 Casier (TV) (IT); TOLOTTO, Daniele, 31040 Chiarano (TV) (IT); MARTONE, Dario, 35138 Padova (PD) (IT); D'AGOSTINI, Mauro, 35018 San Martino di Lupari (PD) (IT); ZANOLIN, Alessandro, 35010 Trebaseleghe (PD) (IT); ZONTA, Paolo, 31033 Castelfranco Veneto (TV) (IT); CALLEGARO, Antonio, 31100 Treviso (IT)
(74) Representative: PGA S.p.A.

(57) **Abstract**

The present invention relates to a device for the maintenance of land or a garden, which comprises a housing (4) housing a motor (3) connected to a work tool (2) and a handle (5) connected to the housing and configured to allow a user to manoeuvre the device. The device further comprises a selector (6) carried by the handle (5) and configurable between a locked position in which it engages the housing to fix it angularly to the handle, and a released position in which it disengages the housing to allow an angular movement thereof relative to the handle. The selector (6), during the movement between the locked position and the released position and vice versa, is configured to limit the movement, relative to the motor, of a drive control (7) intended to control the operations of the motor itself.

## Description

### FIELD OF THE INVENTION

The present invention relates to a device for the maintenance of lands or gardens, for example grass mowing operations and/or pruning operations on plants, shrubs and hedges, for example a device usable as a brush cutter, turf trimmer, hedge trimmer and/or chainsaw.

### STATE OF THE ART

Devices for executing maintenance operations, for example pruning plants and hedges, are known in the field of gardening and land maintenance.

Such devices commonly comprise a handle which the operator grasps to handle the device, e.g., to orient the device in the desired direction to execute the maintenance operations. The handle can be rotated relative to a cutting tool to allow the operator to work in the most comfortable position. Such a handle has controls which allow the operator to drive the cutting tool or vary the operating speed thereof according to need. In this situation, the operator needs to prevent a relative rotation between the handle and the cutting tool to be able to operate safely.

### OBJECT OF THE INVENTION

Therefore, the object of the present invention is to solve at least one of the drawbacks and/or limitations of the previous solutions.

A first objective is to provide a device for the maintenance of lands or gardens capable of facilitating the maintenance operations.

It is then the objective of the present disclosure to provide a device for the maintenance of lands or gardens capable of supporting the maintenance operations.

A further objective is to provide a device for the maintenance of lands or gardens capable of ensuring the user will operate in safe conditions.

It is then the objective of the present disclosure to provide a device for the maintenance of lands or gardens capable of improving the final result of the maintenance operations, i.e., of improving the effectiveness of the cutting device.

These and still other objects, which will appear more clearly from the following description, are substantially achieved by a machine for the maintenance of land or gardens in accordance with one or more of the appended claims and/or the following aspects.

### SUMMARY

Aspects of the invention are described here below.

In a 1st aspect, a device is provided for executing gardening or land maintenance operations comprising:
- at least one work tool (2) configured to perform said operations,
- at least one motor (3) connected to the work tool (2),
- a housing (4) which accommodates the motor (3),
- a handle (5) connected to the housing (4) and configured to allow a user to manoeuvre the device,
- a selector (6) carried by the handle (5), movable relative to the latter and configured to selectively allow or prohibit a relative angular movement between the housing (4) and the handle (5),
- a drive control (7) carried by the handle (5) and selectively movable relative to the handle itself to control the operations of the motor (3),

in which the selector (6) is configurable between:
   - a locked position in which it engages the housing (4) to angularly fix it to the handle (5), and
   - a released position in which it disengages the housing (4) to allow an angular movement relative to the handle (5),
wherein the selector (6), at least during the movement between the locked position and the released position and vice versa, is configured to at least limit the movement of the drive control (7) with respect to the handle (5).

In a 2nd aspect according to the preceding aspect, in which the selector (6) comprises an active portion (17) configured to be contacted by a user to move the same selector relative to the handle (5).

In a 3rd aspect according to any one of the preceding aspects, the selector (6) comprises a coupling element (18), optionally emerging from a central zone of the selector (6), said coupling element being directed towards the housing (4) to engage the housing itself and preventing the angular movement thereof relative to the handle (5).

In a 4th aspect according to any one of the preceding aspects, the selector (6) comprises a control portion (20), optionally emerging from the central zone of the selector (6), on the side opposite the coupling element (18), wherein said control portion (20) faces the drive control (7) and is configured to selectively interfere with the drive control itself to prevent the angular movement thereof relative to the handle (5).

In a 5th aspect according to any one of the three preceding aspects, the active portion (17), the coupling element (18) and the control portion (20) of the selector (6) are interconnected to form a single rigid body.

In a 6th aspect according to any one of the two preceding aspects, the control portion (20) of the selector (6), at least in the release position of the selector itself, contacts the drive control (7) to limit the movement thereof relative to the handle (5).

In a 7th aspect according to any one of the preceding aspects, the handle (5) has an internally hollow casing (5a) which forms a compartment (8) where the selector (6) and the drive control (7) are at least partially housed. In an 8th aspect according to the preceding aspect, the control portion (20) of the selector (6) is located in the compartment (8) of the handle (5).

In a 9th aspect according to any one of the preceding aspects, the handle (5) houses a support (28) extending transversely to a side wall of the handle (5) inside the/a compartment (8) of the handle itself.

In a 10th aspect according to the preceding aspect, the support (28) faces an area of the selector (6) opposite the activation portion (17), and in which the support (28) is configured to selectively contact the selector (6) to limit the stroke thereof in the release position.

In an 11th aspect according to any one of the preceding aspects, the handle (5) comprises at least one elastic return component (29), for example a spring, acting on the selector (6) to move it from the release position to the locked position.

In a 12th aspect according to the preceding aspect, in which the elastic return component (29) is interposed between the support (28) of the handle (5) and the selector (6).

In a 13th aspect according to any one of the preceding aspects, the housing (4) comprises at least one rear portion (21) facing the handle (5) and having two or more recesses (23) for receiving, in the locked position, part of the selector (6) and angularly locking the housing (4) with respect to the handle (5).

In a 14th aspect according to the preceding aspect, each recess (23) is at least partly counter-shaped to an end section of the coupling element (18) of the selector (6) to allow the engagement thereof therein.

In a 15th aspect according to any one of the preceding aspects, the coupling element (18) is hook-shaped.

In a 16th aspect according to any one of the three preceding aspects, said two or more recesses (23) are angularly offset from each other, optionally by an angle comprised between 20° and 110°.

In a 17th aspect according to any one of the four preceding aspects, the rear portion (21) of the housing (4) comprises one or more connection sections (27), each of said connection sections being interposed between two recesses (23) adjacent to each other.

In an 18th aspect according to the preceding aspect, said connection sections (27) form a guide to allow the selector (6) to slide, in the release position, between adjacent recesses (23).

In a 19th aspect according to any one of the preceding aspects, the housing (4) comprises:
- a plurality of recesses (23) defined on the/a rear portion (21) of the housing (4) and angularly offset from each other,
- a plurality of connection sections (27) defined on the/a rear portion (21) and respectively interposed between two adjacent recesses (23).

In a 20th aspect according to any one of the three preceding aspects, the connection sections (27) are arranged along an ideal cylindrical surface.

In a 21st aspect according to any one of the preceding aspects from the 13th to the 20th, said two or more recesses (23) emerge radially with respect to said ideal cylindrical surface.

In a 22nd aspect according to any one of the preceding aspects, the/a casing (5a) of the handle (5) comprises a front portion (32) facing the housing (4) and having a sliding guide (26) which rotationally constrains the same housing to the handle (5).

In a 23rd aspect according to the preceding aspect, the sliding guide (26) of the handle (5) has a groove (30) adapted to receive an engagement portion (31) of the housing (4) which, in the released condition of the selector (6), is configured to slide in the groove (30) of the handle (5) to allow the rotation of the same handle (5) relative to the housing (4).

In a 24th aspect according to any one of the two preceding aspects, the sliding guide (26) has, in transverse section with respect to an ideal plane parallel to an extension direction (X) of the work tool (2), a "C" or "U" profile.

In a 25th aspect according to any one of the preceding aspects, the drive control (7) is movable between:
- an activation condition in which it is configured to control the operations of the motor (3),
- a deactivation condition in which it is configured to prevent a movement of the motor (3),
wherein the drive control (7), at least during the movement between the deactivation and the activation condition, contacts the selector (6) to prevent the movement thereof relative to the handle (5).

In a 26th aspect according to the preceding aspect, the drive control (7), in the deactivation condition, is spaced apart from the selector (6) to allow the movement thereof between the locked and release positions and vice versa.

In a 27th aspect according to any one of the two preceding aspects, the drive control (7) comprises:
- a main body (10),
- a gripping portion (11) configured to allow a user to move the drive control itself,
- a locking portion (12) emerging away from the main body (10) on the side opposite the gripping portion (11). In a 28th aspect according to the preceding aspect, the locking portion (12) faces the selector (6) and, in the activation condition of the drive control (7), is configured to contact the selector itself to prevent a movement thereof relative to the handle (5).

In a 29th aspect according to any one of the two preceding aspects, said locking portion (12) in the activation condition of the drive control (7) is configured to contact said control portion (20).

In a 30th aspect according to any one of the preceding aspects, the handle (5) comprises a pin (9) which engages, optionally by means of a hinge constraint, the drive control (7) to the handle itself, in which said pin (9) defines a rotation axis (A) of the drive control (7).

In a 31st aspect according to the preceding aspect, the/a locking portion (12) is aligned with the pin (9), optionally with the rotation axis (A), along a plane transverse to the gripping portion (11).

In a 32nd aspect according to any one of the five preceding aspects, the drive control (7) comprises an activation portion (14) adjacent to the gripping portion (11) and extending in extension of the main body (10) in the direction of the selector (6) optionally inside the compartment (8) of the handle (5).

In a 33rd aspect according to any one of the preceding aspects, the activation portion (14) is angularly offset with respect to the locking portion (12) of the drive control (7), defining, in cooperation with the same locking portion, a cavity (24) adapted to partially receive the selector (6) when in the released position.

In a 34th aspect according to any one of the two preceding aspects, the activation portion (14) is angularly offset with respect to the locking portion (12) of the drive control (7) by an angle comprised between 60° and 250°. In a 35th aspect according to any one of the preceding aspects, the device comprises a switch (13) which, when in contact with the drive control (7), is configured to generate one or more signals representative of a movement of the drive control (7).

In a 36th aspect according to the preceding aspect, the/a switch (13) is configured to generate one or more signals representative of a movement of the drive control (7) from the deactivation to the activation condition. In a 37th aspect according to any one of the two preceding aspects, the activation portion (14), in the activation condition of the drive control (7), is configured to contact the switch (13) to control the operations thereof.

In a 38th aspect according to any one of the preceding aspects, the device comprises a knob (15), distinct from said handle (5) and defined on the housing (4), configured to be grasped by a user to manoeuvre the device. In a 39th aspect according to the preceding aspect, the knob (10) comprises an activation element (16) configured to generate one or more control signals following a contact by the user.

In a 40th aspect according to any one of the preceding aspects, the device comprises a control unit (50) connected to the switch (13), to the activation element (16) and to the motor (3).

In a 41st aspect according to the preceding aspect, the control unit (50) is configured for:
∘ receiving said one or more movement signals of the drive control (7) emitted by the switch (13),
∘ receiving said one or more control signals from the activation element (16),
∘ controlling the movement of the motor (3) after the simultaneous reception of said one or more movement signals from the switch (13) and said one or more control signals from the activation element (16).

In a 42nd aspect according to any one of the preceding aspects, the device (1) is selected among a brush cutter, a turf trimmer, a hedge trimmer, a chainsaw or a blower.

### BRIEF DESCRIPTION OF THE DRAWINGS

Some embodiments and aspects of the invention will be described hereinafter with reference to the accompanying drawings, given merely for illustrative, non-limiting purposes in which:
- figure 1 is a perspective view of a device for the maintenance of lands or gardens according to the present disclosure;
- figures 2-4 are sectional side views of a handle of the device of figure 1 in respective operating conditions;
- figure 5 is a perspective view of the device of figure 1 in a further operating condition;
- figure 6 is a sectioned perspective view of the device of figure 1;
- figure 7 is a sectioned perspective view of the device along the line VII-VII.

### DEFINITIONS AND CONVENTIONS

It should be noted that in the present detailed description, corresponding parts illustrated in the various figures are indicated with the same numerical references. The figures could illustrate the object of the invention through non-scale depictions; therefore, the parts and components illustrated in the figures related to the object of the invention could exclusively relate to schematic depictions.

### CONTROL UNIT

The machine disclosed and claimed herein comprises/uses at least one control unit responsible for controlling the operating conditions implemented by the same machine.

The control unit can be a single unit or be formed by a plurality of different control units depending on the design choices and operational needs.

Control unit means an electronic type component which can comprise at least one of: a digital processor (CPU), an analogue type circuit, or a combination of one or more digital processors with one or more analogue type circuits. The control unit can be *"configured"* or *"programmed"* to carry out certain steps: in practice, this can be accomplished by any means that allows the control unit to be configured or programmed. For example, in the case of a control unit comprising one or more CPUs and one or more memories, one or more programs can be stored in appropriate memory banks connected to the CPU(s); the program(s) contains instructions which, when executed by the CPU(s), program or configure the control unit to carry out the operations described in relation to the control unit. Alternatively, if the control unit is/or comprises analogue circuitry, then the circuitry of the control unit can be designed to include circuitry configured, in use, to process electrical signals so as to carry out the steps related to the control unit. Parts of the process described herein can be carried out by a data processing unit, or control unit, technically replaceable with one or more electronic computers designed to perform a portion of software program or firmware loaded on a memory medium. Such a software program can be written in any programming language of known type. Electronic computers, if in number equal to two or more, can be connected to each other by means of a data connection such that their computing powers are in any way shared; the same electronic computers can therefore even be installed in geographically different locations, creating a distributed computing environment through the aforementioned data connection. The data processing unit, or control unit, can be a general purpose processor configured for performing one or more parts of the process identified in the present disclosure through the software or firmware program, or be a dedicated ASIC or processor or an FPGA, specifically programmed to perform at least part of the operations of the process described herein. The memory medium can be non-transitory and can be internal or external to the processor, or control unit, or data processing unit, and can - specifically - be a memory geographically located remotely with respect to the electronic computer. The memory medium can also be physically divided into multiple portions, or in cloud form, and the software or firmware can be stored on geographically divided portions of memory.

### DETAILED DESCRIPTION

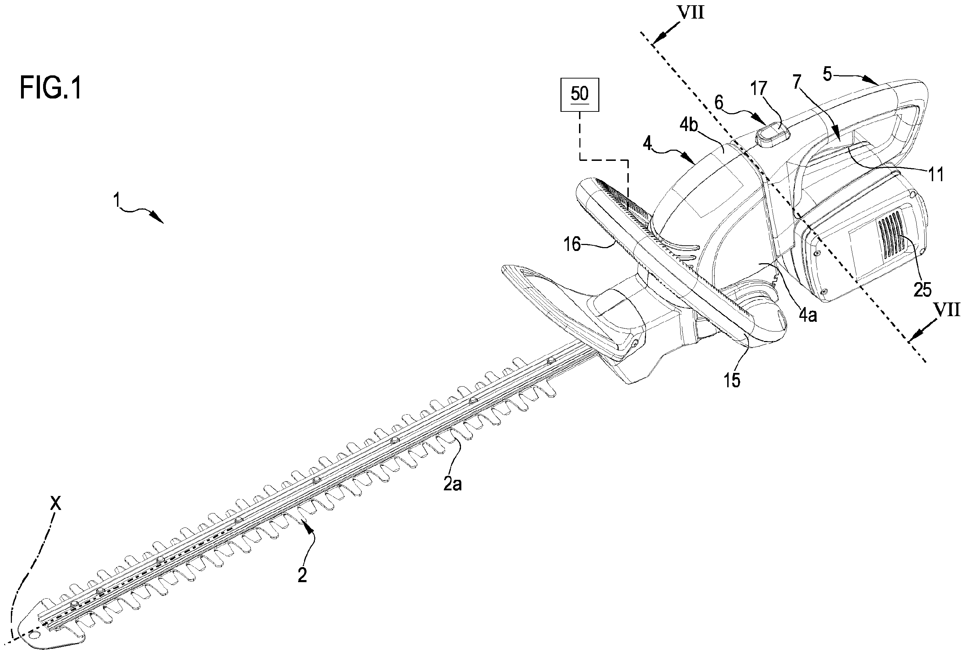

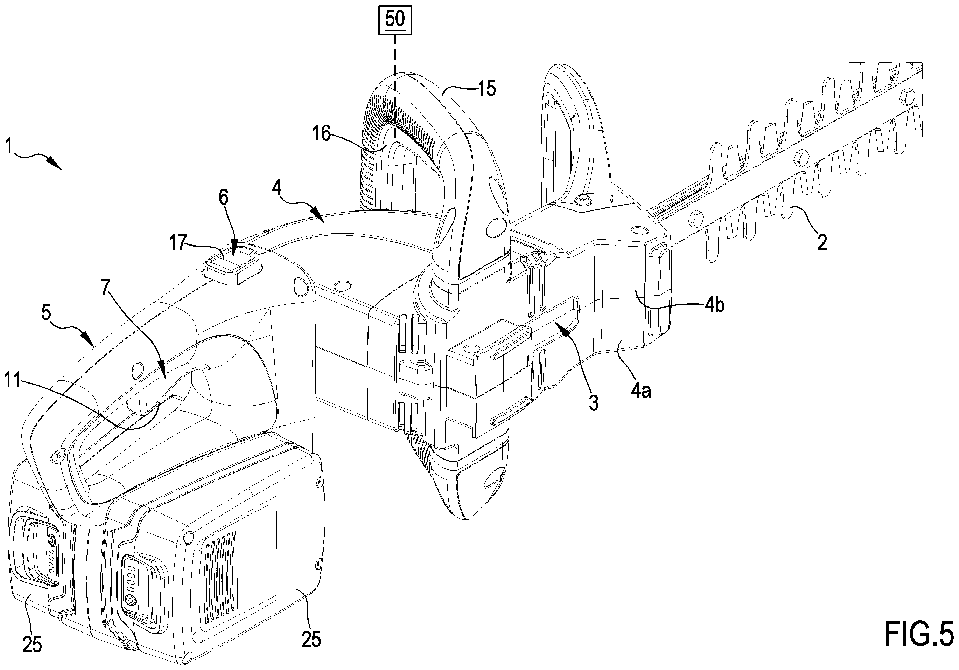

The reference number 1 indicates overall a device for the maintenance of lands or gardens, for example for executing the pruning of plants or hedges. As shown in figures 1 and 5, the device 1 comprises a work tool 2 having at least one cutting blade 2a for executing cutting operations on plants or hedges. The cutting blade 2a can comprise a toothing made of metallic material, for example steel, for executing the cutting operations. In the specific case of a hedge trimmer, the cutting blade 2a can comprise a first and a second blade, facing each other and movable with respect to each other. The device 1 comprises at least one motor 3 connected to the work tool 2 for operating the relative movement between the first and the second blade of the work tool 2. The motor 3 can be an electric motor, optionally in direct current, powered by a battery 25 carried by a handle 5 of the device 1. As will be clear from the following description, the device 1 can be mainly formed by two components relatively movable with each other, i.e., a housing 4 which accommodates the motor 3 and engages, from one side, the work tool 2 and, from the other side, a handle 5 graspable by an operator and which can be oriented relative to the housing 4 to facilitate the execution of maintenance operations. Below the components and functions of the housing 4 will be disclosed, then moving on to the handle 5.

In an example, the housing 4 can have an internally hollow body for accommodating the motor 3 and receiving an end of the work tool 2 mechanically connected to the motor itself. The hollow body of the housing 4 can be formed by two shells 4a, 4b, which can be removably coupled to each other, to allow the engagement of the housing itself to the handle 5. It should be noted how the user, in addition to grasping the device by means of the handle 5, can further grasp a knob 15, carried by the housing 4 and having an annular shape configured to facilitate gripping in different operating conditions. In accordance with the following details, the device can envisage, for safety reasons, that the user grasps the knob 15 to be able to drive the motor 3. For this purpose, the knob 15 can comprise an activation element 16 configured to generate, when contacted by the user, one or more control signals on the basis of which a consent to drive the cutting blade 2a of the work tool 2 will be granted or denied.

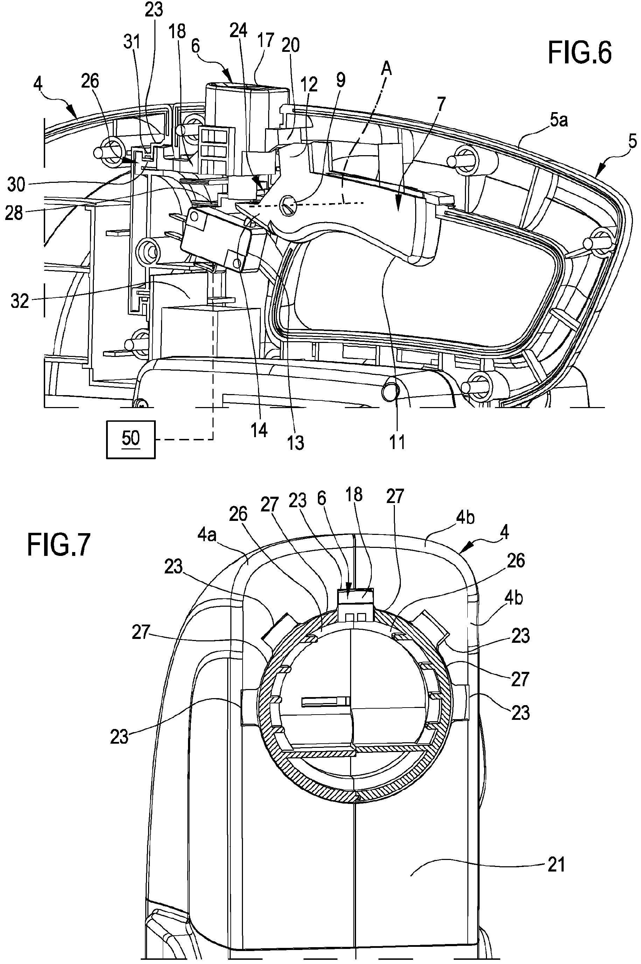

The housing 4 can also comprise a rear portion 21, defined on a side wall of the housing or more internally in the housing, opposite the work tool 2 and having an engagement portion 31 couplable to the handle to allow the housing itself to slide relative to the handle. In an example shown in figure 6, the engagement portion 31 can have a lip which, when inserted inside a groove 30 of the handle 5, allows the relative sliding between the housing 4 and the handle 5, resulting in a rotation of the housing 4 around an axis parallel to an extension direction X of the work tool 2. It should be noted that the first and the second shell 4a, 4b of the housing 4 have semicircular sections of the engagement portion 31 which, during engagement of the housing 4 to the handle 5, are intended to join to form a single annular lip.

Referring now to figure 7 in which the rear portion 21 of the housing is shown in view along a section transverse to the work tool 2, the same rear portion 21 can have two or more recesses 23 which allow to lock the handle 5 in prefixed angular positions when rotated relative to the handle. The recesses 23 can be angularly offset from each other, optionally at an angle comprised between 20° and 110°, to allow the locking of the handle 5 when rotated relative to the housing 4. In an example, the recesses 23 of the rear portion 21 are arranged along an ideal cylindrical surface, radially emerging from the latter. The rear portion 21 can comprise a plurality of recesses 23 defined on an ideal semicircular surface having an angular extension of 180°. In other words, the recesses 23 allow the handle 5 to be locked to the housing 4, when, starting from an initial position in which the handle is aligned with the extension direction X of the cutting tool 2 (figure 1), the handle itself is rotated by 90° clockwise or anti-clockwise (figure 5). The rear portion 21 of the housing 4 can also have one or more connection sections 27, each of which is interposed between two adjacent recesses 23 to define a sliding guide of a selector 6 of the handle 5, intended to lock in a recess 23. Similar to the recesses 23, the connection sections 27 are also arranged on an ideal cylindrical surface.

Continuing now with the description of the handle 5, it is rotatably movable relative to the housing 4 to facilitate the operator in the execution of cutting operations in certain operating conditions.

The handle 5 has an internally hollow casing 5a which forms a compartment 8 where the various components of the device carried by the handle and subsequently disclosed are housed. In an example, the handle 5 can comprise a front portion 32, carried by the casing 5a and facing the rear portion 21 of the housing, on which a sliding guide 26 is made which rotationally constrains the same housing to the handle 5. In an example, the sliding guide 26 of the handle 5 has a groove 30 adapted to receive the engagement portion 31 of the housing and allow the slide thereof therein. It should be noted how the sliding guide 26 has, in transverse section with respect to an ideal plane parallel to the extension direction X of the work tool 2, a "C" or "U" profile. Thereby, the sliding guide 26, in addition to allowing relative rotation between the handle 5 and the housing 4, longitudinally locks the housing 4, preventing the separation thereof from the handle 5 along a direction parallel to the extension direction X.

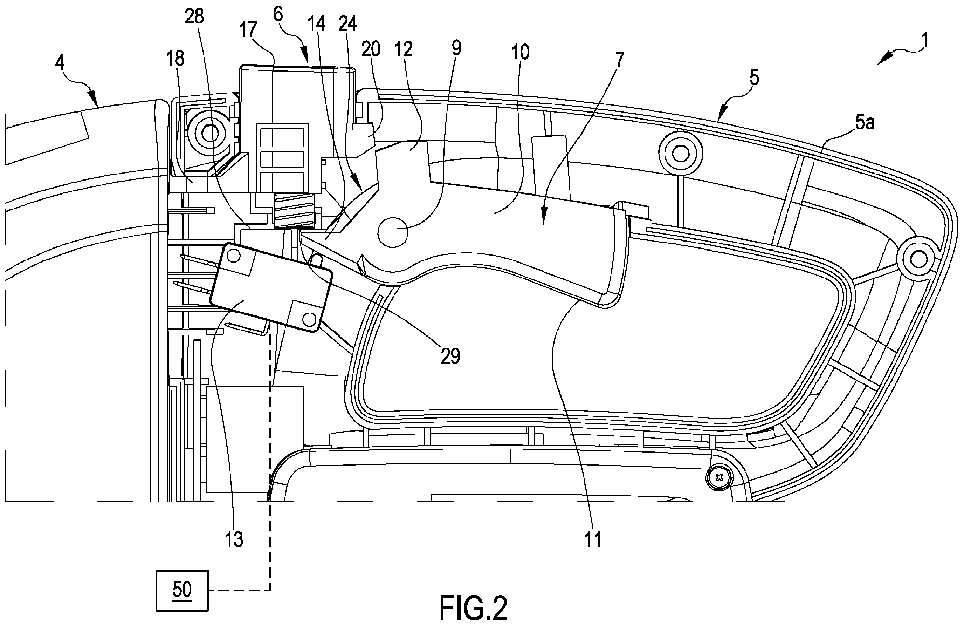

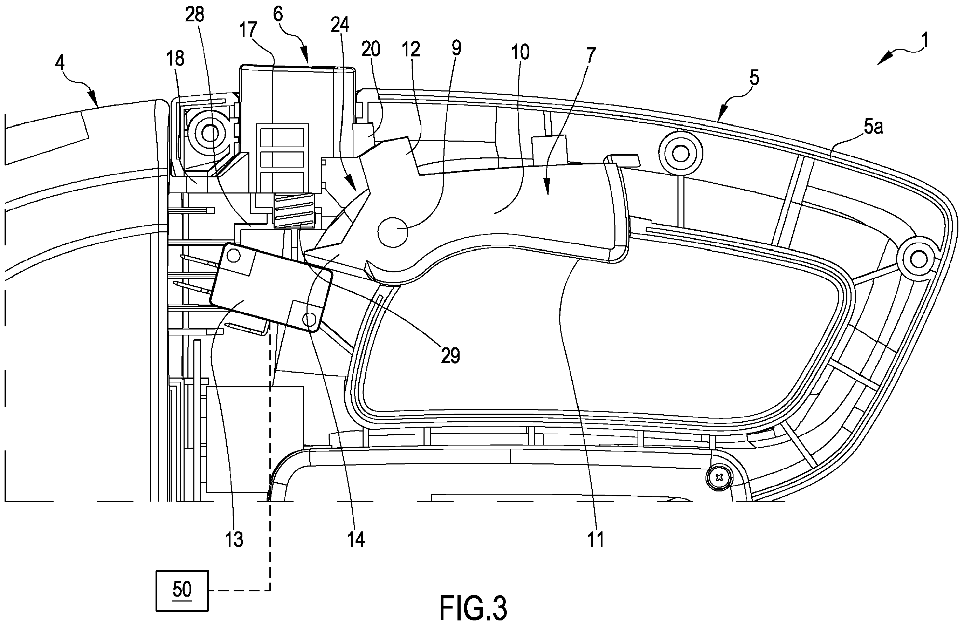

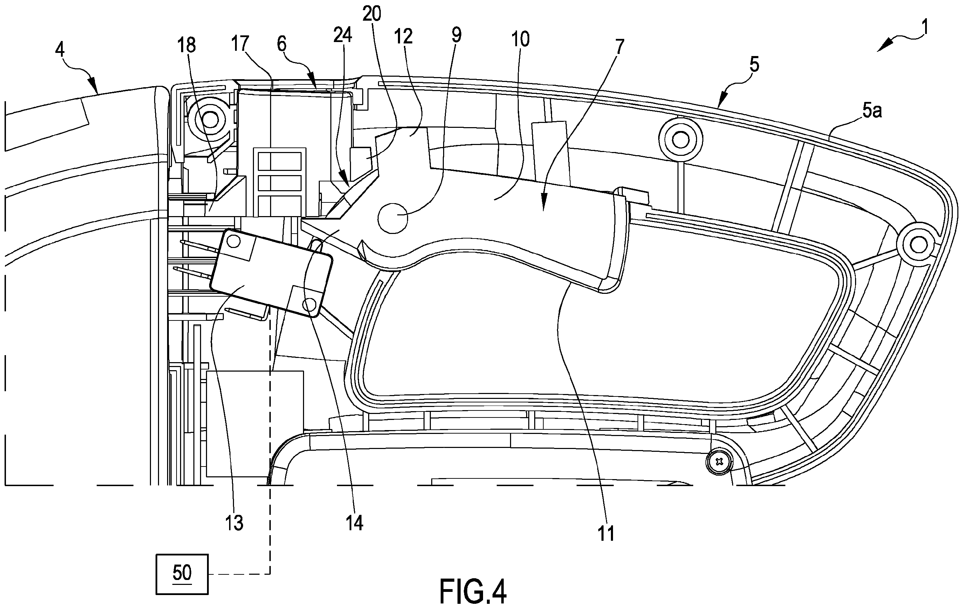

The operator can carry out the rotation between the handle 5 and the housing 4 by acting on a selector 6 carried by the handle 5 and movable relative to the latter to selectively allow or prohibit said rotation. In an example, the selector 6 is movable between a locked position in which it engages the housing 4 to fix it angularly to the handle 5, and a release position in which it disengages the housing 4 to allow an angular movement thereof relative to the handle 5. With reference to figures 1, 2 and 3, the selector 6 is in the locked position, having at least one active portion 17 which emerges outside the handle 5 to be reached by a user so as to move the selector 6 to the release position (figure 4). Inside the compartment 8 of the handle 5, the selector 6 can also comprise a coupling element 18 joined in a single piece to the active portion 17 and extending in the direction of the housing 4 for selectively engaging and unlocking the handle 5 from the housing itself. As visible in figure 6, the coupling element 18, in the locked position of the selector 6, is configured to insert inside a recess 23 of the rear portion 21 of the housing 4, consequently locking the handle 5 to the housing 4. The coupling element 18 can have an elongated body having an end section at least partially counter-shaped to the recess 23. In an example, the elongated body of the coupling element 18 can be hook-shaped and has, in longitudinal sectional view, an "L" profile which, on one side, is joined in a single piece to the active portion 17 and, on the other side, is engageable inside the recess 23. It should therefore be noted how the coupling element 18, in the locking condition of the selector 6, is engaged inside a recess 23 of the rear portion 21 of the housing 4. Vice versa, in the release position of the selector, the coupling element 18 is outside a recess, located in a radially internal zone with respect to the recesses 23 to be able to contact and slide on a connection section 27 in the direction of a further adjacent recess 23. Only when the desired orientation has been reached and when aligned with the further recess 23, the coupling element 18, following the movement of the selector 6 from the release position to the locked position, engages inside the further recess 23. Still referring to figures 2, 3, and 4, the selector 6 can have a control portion 20, opposite the coupling element 18 and facing a drive control 7 independently movable relative to the handle for driving the work tool 2. The coupling portion 20 substantially defines a protuberance inside the compartment 8 of the handle and emerging away from the housing 4 forming, in cooperation with the active portion 17 and/or the coupling element 18, a single rigid body. With reference to figures 2 and 3, the coupling portion 20, when the selector 6 is in the locked position, can be distanced from the drive control 7, allowing the movement thereof relative to the handle 5. Vice versa, referring to figure 4, the coupling portion 20, in the released condition of the selector 6, is inside a cavity 24 of the drive control 7 described below, to interfere or contact the same drive control and prevent the angular movement thereof relative to the handle 5. It should therefore be noted how the arrangement of a selector provided with a coupling element 18 and a control portion 20 having the functions described above, prevents the driving of the drive control 7 when the operator is rotating the handle 5 relative to the casing 4. In other words, following only the movement of the selector 6 from the locked position to the release position, it is possible to carry out the rotation of the handle 5 and simultaneously block or limit the movement of the drive control 7 to the point of preventing the movement of the cutting tool 2. The selector 6 therefore makes it possible to safeguard the safety of an operator, preventing accidental driving of the cutting tool 2 during the rotation of the handle 5.

As mentioned, the movement of the selector 6 from the locked position to the release position is carried out by an operator acting on the active portion, while the movement of the same selector 6 from the release to the locked position can be carried out by an elastic return component 29, such as a spring. As shown in figures 2 and 3, the elastic return component 29 can be interposed between the selector 6 and a support 28, the latter extending transversely to a side wall of the handle 5 and facing an area of the selector 6 opposite the activation portion 17. In an example, the elastic return component 29 can act, from one end, on the support 28 and, from the other end, inside a cavity of the selector 6 interposed between the coupling portion 18 and the control portion 20. In accordance with what is shown in figure 4, the support 28 can further carry out the function of stroke end element of the selector 6, limiting the stroke thereof when moved to the release position.

The device 1 can also comprise a drive control 7 carried by the handle 5 and selectively movable relative to the handle itself to control the operations of the motor 3. In an example, the handle comprises a pin 9 which engages, optionally by means of a hinge constraint, the drive control 7 to the handle itself, allowing the drive control 7 to rotate about a rotation axis A transverse to the extension direction X of the cutting tool 2. The drive control 7 can be movable between an activation condition in which it is configured to vary the speed of the motor 3 and a deactivation condition in which it prevents the movement thereof. In the deactivation condition (figures 2 and 4), the drive control 7 is spaced from the control portion 20, consequently allowing the movement of the selector between the locked and release position and vice versa. On the contrary, the drive control 7, when in the activation condition shown in figure 3, is in contact with the control portion 20, preventing the movement of the selector between the locked and release position. It should therefore be noted how the drive control 7, in order to further increase the safety of the device, blocks, in the activation condition, the selector 6 to prevent the rotation of the handle 5 relative to the casing 4. Thereby, a user is unable to rotate the handle 5 when driving the blade 2a of the work tool 2.

In an example, the activation control 7 is a button or a trigger comprising a main body 10 on which a gripping portion 11 intended to be contacted by an operator to move the drive control itself from the deactivation condition to the activation condition is defined. The gripping portion 11 substantially defines part of a peripheral edge of the main body 10 of the drive control 7, at least in part outside the compartment 8 of the handle 5 to be able to be contacted by a user.

The drive control 7 can also comprise an activation portion 14 adjacent to the gripping portion 11 and extending in extension of the main body 10 in the direction of the selector 6 inside the compartment 8, to contact, in the activation condition of the drive control 7, a switch 13 responsible for driving the motor 3.

The drive control 7 can also comprise a locking portion 12 emerging away from the main body 10 on the side opposite the gripping portion 11, configured to contact, in the activation condition, the control portion 20 of the selector 6 to prevent a movement thereof relative to the handle 5. In an example, the locking portion 12 is a protuberance inside the compartment 8, joined in a single piece to the main body 10 and emerging from a portion of the same main body facing the housing 4. The locking portion 12 therefore faces the control portion 20 of the selector 6, being aligned with the pin 9 along a plane transverse to the gripping portion 11. In an example, the locking portion 12 can also be angularly offset with respect to the activation portion 14, defining, in cooperation with the same activation portion, the cavity 24 which partially receives the selector 6 when in the release position. In detail, the locking portion 12 can be angularly offset from the activation portion 14 by an angle comprised between 60° and 250°.

As previously mentioned, the device can comprise a switch 13 placed inside the compartment 8 of the handle 5 and located near the drive control 7, which is configured to generate one or more signals representative of a movement of the drive control 7 from the deactivation to the activation condition. The device can also comprise a control unit 50 connected to the switch 13 for receiving the movement signals of the drive control 7, as well as the activation element 16 for receiving each control signal emitted by the activation element itself. Following the simultaneous reception of the movement signals emitted by the switch 13 and the control signals emitted by the activation element 16, the control unit 50 is configured to control the movement of the motor 3.

From the operating point of view, a user who wishes to rotate the handle 5 with respect to the housing, must initially release the drive control 7 so that it remains in the deactivated condition. In doing so, the drive control 7 will move away from the selector 6, allowing the movement thereof relative to the handle 5. Subsequently, the user can move the selector 6 from the locked position to the release position, acting on the active portion 17. Such an operation allows the coupling element 18 to be moved outside a recess 23, releasing the rotation between the handle 5 and the housing 4. By rotating the handle 5 with respect to the housing 4, the coupling element 18 can slide on a connection section 27 in the direction of an adjacent recess 23. Once the coupling element 18 is radially aligned with an adjacent recess 23, the elastic return component 29 moves the selector 6 from the release position to the locked position, thus constraining the handle 5 to the housing 4 and again allowing the pressure of the drive control 7.

## Claims

1. Device for executing gardening or land maintenance operations comprising:
- at least one work tool (2) configured to perform said operations,
- at least one motor (3) connected to the work tool (2),
- a housing (4) which accommodates the motor (3),
- a handle (5) connected to the housing (4) and configured to allow a user to manoeuvre the device,
- a selector (6) carried by the handle (5), movable relative to the latter and configured to selectively allow or prohibit a relative angular movement between the housing (4) and the handle (5),
- a drive control (7) carried by the handle (5) and selectively movable relative to the handle itself to control the operations of the motor (3),
in which the selector (6) is configurable between:
- a locked position in which it engages the housing (4) to angularly fix it to the handle (5), and
- a released position in which it disengages the housing (4) to allow an angular movement relative to the handle (5),
wherein the selector (6), at least during the movement between the locked position and the released position and vice versa, is configured to at least limit the movement of the drive control (7) with respect to the handle (5).

2. Device according to the preceding claim, wherein the selector (6) comprises:
- an active portion (17) configured to be contacted by a user to move the same selector relative to the handle (5),
- a coupling element (18), optionally emerging from a central zone of the selector (6), said coupling element being directed towards the housing (4) to engage the housing itself and preventing the angular movement thereof relative to the handle (5),
- a control portion (20), optionally emerging from the central zone of the selector (6), on the side opposite the coupling element (18), wherein said control portion (20) faces the drive control (7) and is configured to selectively interfere with the drive control itself to prevent the angular movement thereof relative to the handle (5).

3. Device according to the preceding claim, wherein the active portion (17), the coupling element (18) and the control portion (20) of the selector (6) are interconnected to form a single rigid body.

4. Device according to any one of the two preceding claims, wherein the control portion (20) of the selector (6), at least in the release position of the selector itself, contacts the drive control (7) to limit the movement thereof relative to the handle (5).

5. Device according to any one of the preceding claims, wherein the handle (5) has an internally hollow casing (5a) forming a compartment (8) where the selector (6) and the drive control (7) are at least partly housed, wherein said control portion (20) of the selector (6) is located in the compartment (8) of the handle (5).

6. Device according to any one of the four preceding claims, wherein the handle (5) houses a support (28) extending transversely to a side wall of the handle (5) inside the/a compartment (8) of the handle itself, wherein the support (28) faces an area of the selector (6) opposite the activation portion (17), and wherein the support (28) is configured to selectively contact the selector (6) to limit the stroke thereof in the release position, wherein the handle (5) comprises at least one elastic return component (29), for example a spring, acting on the selector (6) to move it from the released position to the locked position,
wherein the elastic return component (29) is interposed between the support (28) of the handle (5) and the selector (6).

7. Device according to any one of the preceding claims when dependent on claim 2, wherein said housing (4) comprises at least one rear portion (21) facing the handle (5) and having two or more recesses (23) for receiving, in the locked position, part of the selector (6) and angularly locking the housing (4) with respect to the handle (5),
wherein each recess (23) is at least partly counter-shaped to an end section of the coupling element (18) of the selector (6) to allow the engagement thereof therein,
wherein said two or more recesses (23) are angularly offset from each other, optionally by an angle comprised between 20° and 110°,
wherein the rear portion (21) of the housing (4) comprises one or more connection sections (27), each of said connection sections being interposed between two recesses (23) adjacent to each other, wherein said connection sections (27) form a guide to allow the selector (6) to slide, in the release position, between adjacent recesses (23),
optionally wherein the housing (4) comprises:
- a plurality of recesses (23) defined on the rear portion (21) of the housing (4) and angularly offset from each other,
- a plurality of connection sections (27) defined on the rear portion (21) and respectively interposed between two adjacent recesses (23);
wherein said connection sections (27) are arranged along an ideal cylindrical surface and said two or more recesses (23) emerge radially with respect to said ideal cylindrical surface.

8. Device according to any one of the preceding claims when combined with claim 2, wherein said coupling element (18) is hook-shaped.

9. Device according to any one of the preceding claims, wherein the/a casing (5a) of the handle (5) comprises a front portion (32) facing the housing (4) and having a sliding guide (26) which rotationally constrains the same housing to the handle (5),
wherein the sliding guide (26) of the handle (5) has a groove (30) adapted to receive an engagement portion (31) of the housing (4) which, in the released condition of the selector (6), is configured to slide in the groove (30) of the handle (5) to allow the rotation of the same handle (5) relative to the housing (4),
optionally wherein the sliding guide (26) has, in transverse section with respect to an ideal plane parallel to an extension direction (X) of the work tool (2), a "C" or "U" profile.

10. Device according to any one of the preceding claims, wherein the drive control (7) is movable between:
- an activation condition in which it is configured to control the operations of the motor (3),
- a deactivation condition in which it is configured to prevent a movement of the motor (3),
wherein the drive control (7), at least during the movement between the deactivation and the activation condition, contacts the selector (6) to prevent the movement thereof relative to the handle (5),
wherein the drive control (7), in the deactivation condition, is spaced apart from the selector (6) to allow the movement thereof between the locked and released positions and vice versa.

11. Device according to the preceding claim when dependent on claim 2, wherein the drive control (7) comprises:
- a main body (10),
- a gripping portion (11) configured to allow a user to move the drive control itself,
- a locking portion (12) emerging away from the main body (10) on the side opposite the gripping portion (11), wherein said locking portion (12) faces the selector (6) and, in the activation condition of the drive control (7), is configured to contact the selector itself to prevent a movement thereof relative to the handle (5),
wherein said locking portion (12) in the activation condition of the drive control (7) is configured to contact said control portion (20).

12. Device according to the preceding claim, wherein the handle (5) comprises a pin (9) which engages, optionally by means of a hinge constraint, the drive control (7) to the handle itself, wherein said pin (9) defines a rotation axis (A) of the drive control (7), and
wherein the locking portion (12) is aligned with the pin (9), optionally with the rotation axis (A), along a plane transverse to the gripping portion (11).

13. Device according to any one of the two preceding claims, wherein the drive control (7) comprises an activation portion (14) adjacent to the gripping portion (11) and extending in extension of the main body (10) in the direction of the selector (6) optionally inside the compartment (8) of the handle (5),
wherein the activation portion (14) is angularly offset with respect to the locking portion (12) of the drive control (7), defining, in cooperation with the same locking portion, a cavity (24) adapted to partially receive the selector (6) when in the released position,
optionally wherein the activation portion (14) is angularly offset with respect to the locking portion (12) of the drive control (7) by an angle comprised between 60° and 250°.

14. Device according to the preceding claim comprising a switch (13) which, when in contact with the drive control (7), is configured to generate one or more signals representative of a movement of the drive control (7), optionally of a movement of the drive control (7) from the deactivation to the activation condition,
wherein said activation portion (14), in the activation condition of the drive control (7), is configured to contact the switch (13) to control the operations thereof,
wherein the device further comprises:
- a knob (15), distinct from said handle (5) and defined on the housing (4), configured to be gripped by a user for manoeuvring the device, wherein said knob (10) comprises an activation element (16) configured to generate one or more control signals following a contact by the user,
- a control unit (50) connected to the switch (13), the activation element (16) and the motor (3), wherein said control unit (50) is configured for:
∘ receiving said one or more movement signals of the drive control (7) emitted by the switch (13),
∘ receiving said one or more control signals from the activation element (16),
∘ controlling the movement of the motor (3) after the simultaneous reception of said one or more movement signals from the switch (13) and said one or more control signals from the activation element (16).

15. Device according to any one of the preceding claims, wherein said device (1) is one selected among a brush cutter, a turf trimmer, a hedge trimmer, a chainsaw or a blower.
